# EUROPÄISCHE PATENTSCHRIFT

(11) **EP 1 038 100 B1**
(45) Veröffentlichungstag und Bekanntmachung des Hinweises auf die Patenterteilung: **09.02.2005**
(21) Anmeldenummer: 99911762.5
(22) Anmeldetag: 10.03.1999
(51) Int. Cl.: F02M 35/14

(54) **EINRICHTUNG ZUR FILTRIERUNG DER ANSAUGLUFT EINER BRENNKRAFTMASCHINE**
DEVICE FOR FILTERING AN INTERNAL COMBUSTION ENGINE INTAKE AIR
DISPOSITIF POUR FILTRER L'AIR D'ASPIRATION D'UN MOTEUR A COMBUSTION INTERNE

(30) Priorität: 12.03.1998 DE 19810633
(43) Veröffentlichungstag der Anmeldung: 27.09.2000
(73) Patentinhaber: Mann + Hummel GmbH, 71638 Ludwigsburg (DE)
(72) Erfinder: FÜSSER, Rolf, D-76332 Bad Herrenalb (DE); LUKA, Helmut, D-70806 Kornwestheim (DE); OBERKNAPP, Wolfgang, D-71672 Marbach (DE)
(74) Vertreter: Voth, Gerhard, Dipl.-Ing.
(86) Internationale Anmeldenummer: PCT/EP1999/001530
(87) Internationale Veröffentlichungsnummer: WO 1999/046501

(56) Entgegenhaltungen:
- US-A- 2 783 857
- US-A- 4 790 864
- US-A- 5 106 397
- US-A- 5 112 372

## Beschreibung

Die Erfindung betrifft eine Einrichtung zur Filtrierung der Ansaugluft einer Brennkraftmaschine nach dem Oberbegriff des unabhängigen Anspruchs 1. Es ist bekannt, daß bei Luftfiltern, die an einer Brennkraftmaschine angewendet werden, das Gehäuseabstrahlungsgeräusch und das Mündungsgeräusch am Rohlufteinlaß relativ hoch ist und zu einem gewissen Teil zu der gesamten Geräuschentwicklung einer Brennkraftmaschine beiträgt. Dieses Geräusch wird im wesentlichen durch die Pulsation der Ansaugluft verursacht.

Aus dem DE GM 91 13 807.8 ist ein Luftfilter für eine Brennkraftmaschine bekannt mit einem Gehäuse, in dem ein Filtermitteleinsatz angeordnet ist, das Gehäuse weist einen Rohlufteinlaß und einen Reinluftauslaß auf. In dem Gehäuse ist ein von der Mündung des Reinluftauslasses her in den Reinluftraum sich erstreckendes Reinluftdämpferrohr vorgesehen, dieses weist an seiner Wandung Bohrungen auf. Das Reinluftdämpferrohr hat die Aufgabe, die Pulsationsschwingungen der Ansaugluft zu verringern. Da das Reinluftrohr einen bestimmten Durchmesser und eine bestimmte Länge aufweisen muß, um den gewünschten Effekt zu erzielen, ist der Bauraum für diese Anordnung erheblich. Gerade bei Anwendung einer Brennkraftmaschine in einem Fahrzeug ist es erforderlich, den Bauraum des Ansaugtraktes möglichst gering zu halten.

Aus der US-PS 5,112,372 ist eine Luftreinigungseinrichtung bekannt mit einem Filterelement, welches einen Diffusor aufweist. Der Diffusor ist in einer Endscheibe des Filterelements eingebettet.

Der Erfindung liegt die Aufgabe zugrunde, eine Einrichtung zur Filtrierung von Ansaugluft einer Brennkraftmaschine zu schaffen, welche gleichzeitig die Pulsationsschwingungen der Ansaugluft reduziert und kompakt aufgebaut ist. Diese Aufgabe wird ausgehend von dem Oberbegriff des unabhängigen Anspruch 1 durch dessen kennzeichnende Merkmale gelöst.

Der Vorteil der Erfindung liegt darin, daß ein Filterelement mit einem Diffusor kombiniert wird und der Diffusor sich im Inneren des Filterelements befindet.

Ferner ist der Diffusor an den Stirnseiten des Filterelements über Endscheiben mit dem Filterelement verbunden. Damit bilden Filterelement und Diffusor eine Einheit, sofern der Diffusor aus einem Kunststoffmaterial besteht ist die thermische Entsorgung dieser Einheit problemlos möglich.

Bevorzugt weist der Diffusor eine Länge L auf, die λ / 4 der zu löschenden Schallwelle beträgt oder bei der λ / 4 ein ungeradzahlig Vielfaches der Diffusorlänge ist.

Eine Ausgestaltung dieses Filterelements sieht vor, dieses an dem äußeren Umfang mit einem Vties oder einem Schaumstoffmaterial zur Abscheidung von Grobschmutz zu versehen.

Diese und weitere Merkmale von bevorzugten Weiterbildungen der Erfindung gehen außer aus den Ansprüchen auch aus der Beschreibung und den Zeichnungen hervor.

Die Erfindung wir nachfolgend Anhand von Ausführungsbeispielen näher erläutert.

Es zeigt
- Figur 1: ein hohlzylindrisches Filterelement
- Figur 2: die schematische Darstellung einer Einrichtung zur Filtrierung von Ansaugluft einer Brennkraftmaschine.

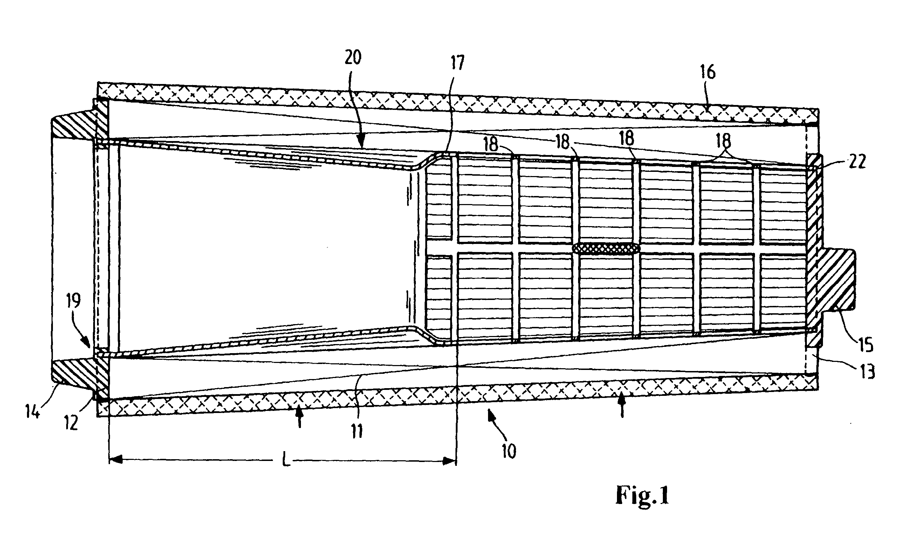

Das in Figur 1 in einer Schnittdarstellung gezeigte hohlzylindrische Filterelement 10 besteht aus einem zick-zack-förmig gefaltetem Filtermedium insbesondere Filterpapier, dieses weist an den Stirnseiten Endscheiben 12, 13 auf. Die Endscheiben bestehen bevorzugt aus einem Polyurethan. Die Faltenden an der Stirnseite 13 sind stirnkantenverieimt, da die Endscheibe nur einen kleinen Teil der Stirnseite abdeckt. Dadurch wird verhindert, daß Wasser in der Falte stehenbleibt, da es durch die außen offenen Falten ablaufen kann. Die Endscheibe 12 ist gleichzeitig als Dichtung mit einem Dichtungswulst 14 versehen, der auf ein hier nicht dargestelltes Rohr aufgeschoben wird und eine radiale Abdichtung bewirkt. Die Endscheibe 13 welche ebenfalls aus Polyurethanschaum besteht, weist ein Stützelement 15 auf und verschließt das rechtsseitige Ende des Filterelements 10. Auf dem zick-zack-förmig gefaltetem Filtermedium 11 ist ein Vliesfilter 16 angeordnet, dieses kann im Bereich der Endscheiben 12, 13 beispielsweise mit einer Klebeverbindung befestigt sein und dient zur Grobabscheidung. Der Stützkörper 17 auf welchem das Filtermedium - 11 angeordnet ist, ist nach Art eines Diffusors ausgebildet, das heißt dieser ist auf der linksseitigen Hälfte geschlossen, verjüngt sich zur Mitte hin und ist auf der rechtsseitigen Hälfte mit Stützringen 18 zur Abstützung für das Filtermedium 11 versehen. Selbstverständlich besteht auch die Möglichkeit, auf der linksseitigen Oberfläche des Diffusors Stützelemente anzuordnen. Der Diffusor ist im Bereich 19 in die Endscheibe 12 eingebettet und an dieser Stelle radial elastisch ausgebildet. Auf der gegenüber liegenden Seite ist der Diffusor 20 ebenfalls mit einem Stützsteg 22 in der Endscheibe 13 eingebettet.

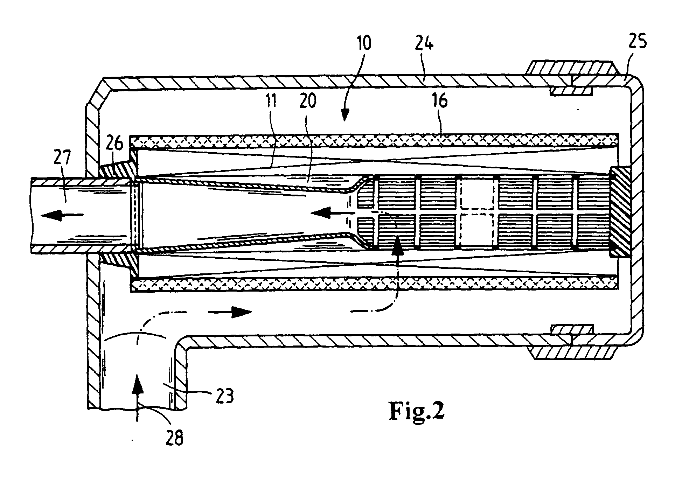

Figur 2 zeigt eine Einrichtung zur Filtrierung von Ansaugluft einer Brennkraftmaschine. Die Rohluft gelangt gemäß dem Pfeil 28 über den Rohlufteinlaß 23 in das Innere eines Gehäuses 24. Durchströmt von dort das Vliesfilter 16 sowie das Filtermedium 11 und gelangt durch die Öffnung des Diffusors 20 zu dem Reinluftauslaß 27. Das Gehäuse 24 ist mit einem Deckel 25 verschlossen. Das Filterelement 10 ist reinluftseitig auf einem Dichtungsstutzen 26 befestigt, an der gegenüber liegenden Seite stützt sich das Filterelement 10 an dem Deckel 25 ab. Zum Austausch des Filterelements 10 wird der Deckel 25 geöffnet, das Filterelement herausgezogen und durch ein neues ersetzt oder gereinigt. Die Länge des Diffusors 20 innerhalb des Filterelements 10 ist derart abgestimmt, daß ein bestimmter Frequenzbereich des über den Reinluftauslaß 27 in das Filtergehäuse gelangende Ansauggeräusch gelöscht wird. Der Diffusor 20 wirkt dabei mit dem Gehäuse zusammen und verhindert so einige sonst ohne ihn auftretende Hohlraumresonanzen.

Im Gegensatz zu Figur 1, bei der das Filterelement einen konischen Aufbau aufweist, ist das Filterelement der Figur 2 zylindrisch gestaltet. Je nach Anwendungsfall läßt sich so die Struktur des Filterelements an das vorhandene Filtergehäuse anpassen.

## Patentansprüche

1. Hohlzylindrisches Filterelement zur Filtrierung der Ansaugluft einer Brennkraftmaschine, bestehend aus einem insbesondere zick-zack-förmig gefalteten Filtermedium, weiches an den Stirnseiten mit Endscheiben (12, 13) versehen ist, wobei in der hohlzylindrischen Öffnung des Filterelements (10) ein Diffusor (20) zur Löschung von Schallwellen voraesehen ist und der Diffusor (20) an den Stirnseiten des Filteretements (10) über die Endscheiben (12, 13) mit dem Filterelement (10) verbunden ist, wobei der Diffusen (20) im Bereich (19) in die erste Endscheibe (12) eingebettet ist und an dieser Stelle radialelastisch ausgebildet ist, **dadurch gekennzeichnet, dass** der diffusor (20) auf der gegenüberliegenden Seite mit einem Stützsteg (22) in der weiteren Endscheibe (13) eingebettet ist.

2. Hohlzylindrisches Filterelement nach Anspruch 1 **dadurch gekennzeichnet, dass** am Außenumfang ein Vlies (16) oder Schaumstoff zur Vorabscheidung vorgesehen ist.

## Claims

1. Hollow cylindrical filter element for filtering the intake air of an internal combustion engine, said filter element includes a filtering medium, which is folded more especially in a zigzag-shaped manner, and said element is provided at the end faces with end discs (12, 13), wherein a diffuser (20) is provided in the hollow cylindrical opening of the filter element (10) for suppressing sound waves and the diffuser (20) is connected to the filter element (10) at the end faces of the filter element (10) via the end discs (12, 13), wherein the diffuser (20) is embedded into the first end disc (12) in the region (19) and is radially resilient at this position, **characterised in that** the diffuser (20) is embedded with a support strut (22) in the other end disc (13) at the oppositely situated end.

2. Hollow cylindrical filter element according to claim 1, **characterised in that** a non-woven fabric (16) or foam material is provided on the outer circumference for the purposes of preliminary separation.

## Revendications

1. Elément filtrant cylindrique creux pour filtrer l'air d'aspiration d'un moteur à combustion interne, comprenant un moyen filtrant notamment plié en zigzag, qui présente des segments d'extrémité (12, 13) aux faces frontales, avec un diffuseur (20) prévu dans l'ouverture cylindrique creuse de l'élément filtrant (10), pour éteindre des ondes sonores, le diffuseur (20) étant relié à l'élément filtrant (10) par les segments d'extrémité (12, 13) aux faces frontales de l'élément filtrant (10), le diffuseur (20) étant encastré dans le premier segment d'extrémité (12) dans la zone (19) et présentant à cet endroit une forme élastique radialement,
**caractérisé en ce que**
le diffuseur (20) est encastré du côté opposé par une nervure d'appui (22) dans l'autre segment d'extrémité (13).

2. Elément filtrant cylindrique creux selon la revendication 1,
**caractérisé en ce qu'**
à la périphérie extérieure, un non-tissé (16) ou une mousse est prévu(e) pour la séparation préalable.
